# EUROPÄISCHE PATENTANMELDUNG

(11) **EP 3 300 206 A1**
(43) Veröffentlichungstag der Anmeldung: **28.03.2018**
(21) Anmeldenummer: 17192868.2
(22) Anmeldetag: 25.09.2017
(51) Int. Cl.: H02J 3/00, H02J 3/38, H04L 9/06, G01R 22/06

(54) **ENERGIEVERSORGUNGSSYSTEM UND VERFAHREN ZUM BETREIBEN EINES ENERGIEVERSORGUNGSSYSTEMS**

(30) Priorität: 26.09.2016 DE 102016118115
(71) Anmelder: EnBW Energie Baden-Württemberg AG, 76131 Karlsruhe (DE)
(72) Erfinder: Winter, Klaus, 77833 Ottersweier (DE)
(74) Vertreter: Kaufmann, Ursula Josefine

(57) **Zusammenfassung**

Die Erfindung betrifft ein Energieversorgungssystem (100) sowie ein Verfahren zum Betreiben eines Energieversorgungssystems. Das Energieversorgungssystem (100) weist ein Versorgungsnetz (102) sowie an das Versorgungsnetz (102) angekoppelte Teilnehmer (201, 202, 203, 204) mit Entnahme- und/oder Einspeisvorrichtungen (111, 112, 113, 114) auf, mit denen Energie aus dem Versorgungsnetz (102) beziehbar und/oder einspeisbar ist. Teilnehmerseitige Zählereinrichtungen (121, 122, 123, 124) sind vorgesehen, welche mit dem Versorgungsnetz (102) gekoppelt sind zur Erfassung von aus dem Versorgungsnetz (102) bezogener und/oder in das Versorgungsnetz (102) eingespeister Energie. Die teilnehmerseitigen Zählereinrichtungen (121, 122, 123, 124) sind mit einer Datenbank (150) gekoppelt. Die teilnehmerseitigen Zählereinrichtungen (121, 122, 123, 124) sind ausgebildet, zumindest Zählermesswerte direkt oder indirekt an die Datenbank (150) zu übermitteln. Jeder Teilnehmer (201, 202, 203, 204) ist mittels eines Datenbankzugriffswerkzeugs (131, 132, 133, 134) mit der Datenbank (150) gekoppelt, mit dem Daten in die Datenbank (150) einlesbar und/oder aus der Datenbank (150) auslesbar sind. Wenigstens einer der Teilnehmer (201) ist zur Netzstabilisierung mit wenigstens einer Netzkoppelstelle vorgesehen, um einen Überschuss an eingespeister Energie aus dem Versorgungsnetz (102) aufzunehmen und/oder eine Fehlmenge an Energie in das Versorgungsnetz (102) einzuspeisen.

## Beschreibung

### Stand der Technik

Die Erfindung betrifft ein Energieversorgungssystem sowie ein Verfahren zum Betreiben eines Energieersorgungssystems.

Energieversorgungssysteme versorgen über ein Versorgungsnetz daran angekoppelte Teilnehmer beispielsweise mit elektrischer Energie. Es ist möglich, dass Teilnehmer nicht nur Energie aus dem Versorgungsnetz beziehen, sondern auch aus regenerativen Energiequellen einspeisen können, etwa aus lokalen Photovoltaikanlagen, Biogasanlagen und dergleichen. Eingespeiste Energie wird dem Teilnehmer vergütet, während bezogene Energie dem Teilnehmer in Rechnung gestellt wird. Moderne Zählereinrichtungen sind in der Lage, sowohl eingespeiste als auch bezogene Energie zu registrieren und Messwerte an den Betreiber zur Abrechnung der Energiemengen zu übermitteln.

### Offenbarung der Erfindung

Die Aufgabe der Erfindung ist es, ein Energieversorgungssystem zu schaffen, das eine verbesserte Effizienz bei der Versorgung von Teilnehmern aufweist.

Eine weitere Aufgabe ist die Schaffung eines Verfahrens zum Betreiben eines solchen Energieversorgungssystems.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Es wird ein Energieversorgungssystem vorgeschlagen mit einem Versorgungsnetz sowie an das Versorgungsnetz angekoppelten Teilnehmern mit Entnahme- und/oder Einspeisvorrichtungen, mit denen Energie aus dem Versorgungsnetz beziehbar und/oder einspeisbar ist. Teilnehmerseitige Zählereinrichtungen sind vorgesehen, welche mit dem Versorgungsnetz gekoppelt sind zur Erfassung von aus dem Versorgungsnetz bezogener und/oder in das Versorgungsnetz eingespeister Energie. Die teilnehmerseitigen Zählereinrichtungen sind mit einer Datenbank gekoppelt. Die teilnehmerseitigen Zählereinrichtungen sind ausgebildet, zumindest Zählermesswerte direkt oder indirekt an die Datenbank zu übermitteln. Jeder Teilnehmer ist mit einem Datenbankzugriffswerkzeug mit der Datenbank gekoppelt, mit dem Daten in die Datenbank einlesbar und/oder aus der Datenbank auslesbar sind. Wenigstens einer der Teilnehmer ist zur Netzstabilisierung mit wenigstens einer Netzkoppelstelle vorgesehen, um einen Überschuss an eingespeister Energie aus dem Versorgungsnetz aufzunehmen und/oder eine Fehlmenge an Energie in das Versorgungsnetz einzuspeisen.

Das Energieversorgungssystem ist vorzugsweise ein elektrisches Energieversorgungssystem, über das elektrische Energie bezogen werden kann und in das elektrische Energie eingespeist werden kann. Optional kann das Energieversorgungssystem auch ein Energieversorgungssystem für andere Medien, wie etwa Gas, sein.

Teilnehmer können insbesondere Anschlussnutzer sein, die als Letztverbraucher zur Nutzung des Versorgungsanschlusses berechtigt sind oder Betreiber von Energieerzeugungsanlagen nach dem Erneuerbare-Energien-Gesetz vom 21. Juli 2016 oder dem Kraft-Wärme-Kopplungsgesetz vom 19. März 2002 in der geänderten Fassung vom 31.Juli 2015. Letztverbraucher sind natürliche oder juristische Personen, die Energie für den eigenen Verbrauch beziehen.

Der wenigstens eine Teilnehmer, der zur Netzstabilisierung mit wenigstens einer Netzkoppelstelle vorgesehen ist, hat eine treuhänderische Funktion inne. In dieser Funktion speist dieser Teilnehmer Energie in das Versorgungsnetz ein, wenn eine Fehlmenge auszugleichen ist und entnimmt Energie aus dem Versorgungsnetz, wenn ein Überschuss vorhanden ist, was ansonsten jeweils die Stabilität des Versorgungsnetzes gefährden kann.

Insbesondere kann die treuhänderische Funktion in Form einer oder mehrerer Autoritäts-Instanzen vorliegen, wie sie nachstehend am Beispiel von Autoritäten erläutert wird, wie sie in bevorzugter Ausführung im Zusammenhang mit einer Blockchain vorgesehen sein können. Mit besonderem Vorteil kann wenigstens eine Autoritäts-Instanz vorgesehen sein, mit der alle wesentlichen administrativen Aufgaben des Energiemarktes durch Marktrollen abgedeckt sein und aktuell diese administrativen Aufgaben auch nur über diese Rollen bedient werden können. Diese Rollen können vorteilhaft in den Blockchain-Ansatz integriert werden. Das grundsätzliche Verständnis ist, dass die Energiemarkt-Rollen bereits heute auf Basis der gültigen Energieregeln in der Lage sind, ihren Energiemarkt-Kunden einen freien P2P-Markt zu eröffnen.

Die Markt-Autorität (Market Authority) stellt sicher, dass alle Aktivitäten der Blockchain hinsichtlich der Bilanzzeiträume kompatibel sind und dass alle Blockchain-Teilnehmer, die sich als Inhaber einer definierten Marktrolle ausgeben, diese Marktrolle auch tatsächlich innehaben.

Die teilnehmerseitigen Zählereinrichtungen übermitteln Zählermesswerte als Istwerte direkt oder indirekt an die Datenbank. Vorteilhaft können die Zählereinrichtungen die Zählerwerte digital übermitteln. Übliche moderne Zählereinrichtungen, die an Versorgungsnetze angeschlossen sind, sind kalibriert und liefern verschlüsselte und zertifizierte Messwerte sowie weitere Größen und/oder Zustände. Die Daten sind damit in hohem Maße vertrauenswürdig.

So genannte "Intelligente Zähler" können über ihr eigenes Kommunikationsmodul in definierten Zeitabständen Messwerte mit einem Zeitstempel bereitstellen und/oder ausgeben, so dass ein Verbrauch an Energie und/oder eine Einspeisung von Energie zu definierten Zeitpunkten bekannt ist. Beispielsweise kann dies im Viertelstundentakt erfolgen. Andere Takte sind ebenfalls möglich, wenn erwünscht. Ebenso können für eine Abrechnung notwendige oder sinnvolle Parameter und/oder Zustände ausgegeben werden, etwa Fehlermeldungen und dergleichen. Die Zählereinrichtungen können im Push-Betrieb senden oder ausgelesen werden. Das Kommunikationsmodul kann eigenständig Daten, z.B. Zählermesswerte, an den Server mit der Datenbank übermitteln. Die Zählermesswerte werden vorzugsweise periodisch übermittelt, beispielsweise viertelstündlich, halbstündlich oder dergleichen. Für einen internen Gebrauch kann die Zählereinrichtung für den Teilnehmer aktuelle Zählermesswerte in kürzeren Zeitabständen bereitstellen.

Dadurch, dass die Teilnehmer auf eine gemeinsame Datenbank zugreifen können, ist ein Bezug von Energie durch einen Teilnehmer möglich, die ein anderer Teilnehmer oder mehrere andere Teilnehmer in das Versorgungsnetz eingespeist haben. Dies ermöglicht einen kleinteiligen, regionalen Energiehandel auch in einem überregionalen Versorgungsnetz. Auch kleine Mengen an Energie können so im Versorgungsnetz von einem Teilnehmer zum anderen gelangen.

Somit sind die Mengen an von den Teilnehmern in das Versorgungsnetz eingespeister und/oder bezogener Energie in der Datenbank teilnehmerspezifisch festgehalten und für jeden Teilnehmer lesbar abgelegt. Damit ist eine Transparenz des Einspeise- und/oder Verbrauchsverhaltens der am Versorgungsnetz angekoppelten Teilnehmer geschaffen.

Nach einer günstigen Ausgestaltung kann wenigstens ein teilnehmerseitiges Datenbankzugriffswerkzeug vorgesehen sein, um wenigstens ein Angebot an prognostizierter einspeisbarer Energie an die Datenbank zu übermitteln. Das Datenbankwerkzeug kann eine Softwareanwendung sein, die auf einem internetfähigen Endgerät installiert ist. Beispielsweise kann ein Teilnehmer, der vorwiegend oder ausschließlich Energie einspeist, abschätzen, welche Menge an Energie in einigen Stunden oder am nächsten Tag zur Verfügung stehen kann. Handelt es sich um Energie aus wetterabhängigen regenerativen Energiequellen wie Photovoltaikanlagen oder Windkraftanlagen kann eine Wetterprognose zugrunde gelegt werden. Unter Berücksichtigung eines etwaigen Eigenverbrauchs des Teilnehmers kann die prognostizierte Energiemenge zu einem bestimmten Preis an andere Teilnehmer angeboten werden. Vorteilhaft kann dies automatisiert erfolgen. Anhand der Istwerte, welche die Zählereinrichtung übermittelt, kann eine Diskrepanz zwischen der tatsächlich eingespeisten Menge an Energie und der prognostizierten Menge an Energie festgestellt werden.

Nach einer günstigen Ausgestaltung kann wenigstens ein Datenbankzugriffswerkzeug vorgesehen sein, um einen Bedarf an beziehbarer Energie an die Datenbank zu übermitteln. Das Datenbankwerkzeug kann eine Softwareanwendung sein, die auf einem internetfähigen Endgerät installiert ist. Ein Teilnehmer, der absehen kann, dass eine bestimmte Menge an Energie zu einem bestimmten Zeitpunkt oder Zeitraum benötigt werden wird, kann seinen geschätzten Bedarf an die Datenbank übermitteln und daraufhin in der Datenbank vorhandene oder neu abgegebene Angebote prüfen. Vorzugsweise kann nach einer günstigen Ausgestaltung das Datenbankzugriffswerkzeug ein Regelwerk mit ein oder mehreren Regeln umfassen, wobei basierend auf dem Regelwerk Angebote aus der Datenbank auswählbar sind. Vorteilhaft kann dies automatisiert erfolgen. Anhand der Istwerte, welche die Zählereinrichtung übermittelt, kann eine Diskrepanz zwischen dem tatsächlichen Bezug an Energie und der angeforderten Menge an Energie festgestellt werden.

Nach einer günstigen Ausgestaltung kann eine Vermittlungseinrichtung vorgesehen sein, die Zählermesswerte einer oder mehrerer Zählereinrichtungen erfassen und über eine Kommunikationsverbindung zur Datenbank weiterleiten kann. Dies erlaubt eine Zusammenfassung von mehreren Zählereinrichtungen beispielsweise einer Teilnehmergemeinschaft.

Nach einer günstigen Ausgestaltung kann eine direkte oder indirekte Kommunikationsverbindung zwischen Datenbankzugriffswerkzeugen vorgesehen sein zur Authentifizierung und/oder Bereitstellung von Integrität einer oder mehrerer Transaktionen mit der Datenbank. Eine direkte Kommunikation wäre beispielsweise direkt zwischen den Datenbankzugriffswerkzeugen ohne Zwischenschaltung der Datenbank, während eine indirekte Kommunikationsverbindung beispielsweise über Lesezugriffe auf die Datenbank bestehen kann. Mit besonderem Vorteil kann auf die an sich bekannte Blockchain Technik zurückgegriffen werden. Die Blockchain stellt nicht nur die Authentifizierung, sondern vor allem auch die Integrität der Daten zur Verfügung. Dies bedeutet, dass die Gültigkeit der Transaktion auch in der Blockchain festgestellt wird. Die außerhalb der Blockchain vorhandene Existenz eines realen Gutes, wie z.B. Energie, unterscheidet diesen Ansatz grundsätzlich von Ansätzen wie so genannten Krypto-Währungen.
Vorteilhaft kann eine direkte oder indirekte Kommunikationsverbindung zwischen Datenbankzugriffswerkzeugen vorgesehen sein zur Authentifizierung und/oder Bereitstellung von Integrität eines oder mehrerer Teilnehmer. Insbesondere kann dies durch eine oder mehrere Autoritäts-Instanzen erfolgen.
In analoger Weise kommt die Blockchain-Technologie beispielsweise bei der Verwendung der so genannten Ethereum-Technologie zum Einsatz. Ehtereum ist eine dezentralisierte Plattform, auf der so genannte "Smart Contracts" Verträge laufen. Die Anwendungen laufen so wie programmiert, ohne die Möglichkeit des temporären Abschaltens, Zensur, Betrug oder Eingriff von Dritten.

Dies erlaubt eine sehr sichere Datenbasis, die nachträglich nicht veränderbar, nicht löschbar, anonym und für alle Teilnehmer transparent ist und somit eine sehr hohe Sicherheit gewährleistet. Datenbankzugriffswerkzeuge werden in der Blockchain Technik üblicherweise als Wallet bezeichnet.

Der Blockchain-Technologie bietet günstigerweise ein hohes Potential zur Veränderung des Energiemarktes. Insbesondere der Energieeinkauf, Energieverkauf, Energietausch usw. durch Endkunden kann ein wesentlicher Beitrag zur Umsetzung der Umwandlung des Energiesystems hin zu einer dezentralen und durch erneuerbaren Energie geprägten Erzeugung darstellen.

Gleichzeitig ist der Energiemarkt stark durch Regulation geprägt. Obwohl sich die üblicherweise staatlichen Regeln dieses Marktes auch in Wandlung befinden, sind die Zeiträume, in denen sich Marktregeln grundsätzlich ändern, wesentlich länger, als die Bereitstellung neuer Technologien benötigt. Andererseits sind die Regularien des Marktes nicht nur aus formalen Gründen für die Anwendung einer Blockchain-Energiehandels-Plattform relevant. Denn sie regeln faktisch den Nachweis der Existenz und der Art eines an das Energienetz angeschlossenen Energiesystems sowohl für Verbraucher als auch für Erzeuger, den Nachweis der Energiewandlung einer Anlage, insbesondere Zählwerte, und der Zuordnung der Zählwerte zu einer Anlage, sowie den verbindlichen Umgang mit abweichenden Energiemengen.

Ein vorteilhaftes Merkmal der Blockchain-Technologie ist, dass Teilnehmer, wie Menschen oder Organisationen, die auf einer Blockchain miteinander Geschäftsbeziehungen pflegen, ohne die Mitwirkung anderer ihre Blockchain-Identität mit Hilfe mathematisch-kryptologischer Verfahren selbst festlegen können. Die Blockchain-Identität repräsentiert gleichzeitig ein Konto, auf dem Transaktionen durchgeführt werden können und auf dem entsprechend "Guthaben" ablesbar sind. Die Teilnehmer bestimmen auch selbst, mit wie vielen Identitäten sie auf der Blockchain agieren möchten.

Sofern der reale Teilnehmer hinter diesem Konto nicht auf anderem Wege bekannt geworden ist, bleibt der Teilnehmer, d.h. der Kontoinhaber, anonym.

Dies funktioniert nahtlos, wenn das Gut, das auf der Blockchain den Eigentümer wechselt, rein digital ist, wie dies bei Krypto-Währungen der Fall ist. In einem solchen Fall ist auch das so genannte "Double-Spending"-Problem, bei dem fehlerhaft doppelt ausgegeben wird, durch eine Blockchain gut lösbar.

Bei physischen Gütern, deren digitale Repräsentation in der Blockchain den Eigentümer wechselt, ist es vorteilhaft, wenn gewährleistet werden kann, dass das physische Gut und seine digitale Repräsentation in der Blockchain konsistent sind.

Im Energiemarkt sind auf Basis einer Blockchain-Kontenbildung zweckmäßigerweise folgende Rahmenbedingungen zu erfüllen:
(i) Strommengen und Strompreise sind aus physikalischen Gründen zeitbezogen, da die Speicherung von Strom sehr kostspielig ist. Der Energiemarkt hat daher fest definierte Bilanz-Zeiträume, die auf der Blockchain abgebildet werden können.
(ii) Es soll sichergestellt werden, dass eine Verbrauchsanlage oder Erzeugungsanlage tatsächlich existiert und dass die Anlage an das Stromnetz angebunden ist. Wenn die Stromherkunft relevant ist (z.B. erneuerbar Photovoltaikstrom, Strom aus Windenergie oder Strom aus konventioneller Stromerzeugung), soll eine verlässliche Aussage über die Stromherkunft getroffen werden können.
(iii) Es soll sichergestellt werden, dass die Verbrauchswerte bzw. Erzeugungswerte korrekt sind und der physikalisch korrekten Anlage zugeordnet werden können.
(iv) Der reale Verbrauch bzw. die reale Erzeugung eines Endkunden (d.h. Teilnehmers) entsprechen fast nie einem geplanten Wert. Wenn so genannte Peer-to-Peer-Geschäfte (P2P-Geschäfte) zwischen zwei Teilnehmern (Peers) mit fester Menge vor dem bekannten Verbrauch oder der bekannten Erzeugung abgeschlossen werden, sollen Fehlmengen oder Mehrmengen ausgeglichen werden.

Mit besonderem Vorteil kann wenigstens eine Autoritäts-Instanz vorgesehen sein, mit der alle wesentlichen administrativen Aufgaben des Energiemarktes durch Marktrollen abgedeckt sein und aktuell diese administrativen Aufgaben auch nur über diese Rollen bedient werden können.

Diese Rollen können vorteilhaft in den Blockchain-Ansatz integriert werden. Das grundsätzliche Verständnis ist, dass die Energiemarkt-Rollen bereits heute auf Basis der gültigen Energieregeln in der Lage sind, ihren Energiemarkt-Kunden einen freien P2P-Markt zu eröffnen.

Eine Markt-Autorität (Market Authority) stellt sicher, dass alle Aktivitäten der Blockchain hinsichtlich der Bilanzzeiträume kompatibel sind und dass alle Blockchain-Teilnehmer, die sich als Inhaber einer definierten Marktrolle ausgeben, diese Marktrolle auch tatsächlich innehaben.

Im weitesten Sinne wird die Markt-Autorität im heutigen bekannten Non-Blockchain-Energiemarkt in Deutschland durch die Bundenetzagentur repräsentiert, die entsprechende Zulassungen für Marktrollen an Unternehmen vergibt. Dies ist als ILN-Nummer (internationale Lokationsnummer) oder GLN-Nummer (globale Lokationsnummer) bekannt.

Die Markt-Autorität sorgt dafür, dass alle Aktivitäten ausschließlich auf einem festgelegten Zeitraster stattfinden. Im heutigen Energiemarkt sind dies die Viertelstunde-Werte, auf denen nahezu alle Prozesse (Bilanzierung, Zählwerterfassung, Börsenpreise, ...) aufbauen. Dadurch ist sichergestellt, dass Handelsgeschäfte, aber auch z.B. Aussagen zu Anlagenexistenz und Zählwerte, zueinander kompatibel sind.

Durch eine zentrale Definition der Bilanzzeiträume lassen sich unter Umständen Implementierungsalternativen auf der Blockchain entwickeln, die positive Auswirkung auf Performance und Kostenstrukturen haben.

Der Markt-Autorität sind - außerhalb der Blockchain - alle Inhaber von relevanten Marktrollen (z.B. Messstellenbetreiber, Energie-Lieferant, Versorgungsnetzbetreiber) bekannt. Ihr ist auch bekannt, mit welchen Blockchain-Identitäten diese jeweiligen Marktrollen agieren. Dadurch ist sie in der Lage, für alle Aktivitäten eines Marktrollen-Inhabers zu bestätigen, dass diese Aktion zulässig ist.

Das oder die Blockchain-Konten der Markt-Autorität sind veröffentlicht, beispielsweise im Blockchain-Code. Dadurch kann sichergestellt werden, dass Aussagen, die nur durch die Markt-Autorität getätigt werden dürfen, auch von dieser kommen.

Die Markt-Rollen-Autoritäten (Market-Role-Authorities) sind die Marktteilnehmer, die es einem P2P-Marktteilnehmer (Verbraucher und/oder Erzeuger) ermöglichen, auf der Blockchain zu agieren. Sie haben außerhalb der Blockchain einen klassischen Marktvertrag, beispielsweise als Versorgungsnetzbetreiber, Messstellenbetreiber, Lieferant, mit ihren Kunden und sind dadurch in der Lage bestimmte Aussagen des P2P-Marktes zu validieren oder zu treffen. Validiert werden kann beispielsweise eine Aussage eines Teilnehmers: "Ich habe eine Verbrauchsstelle" oder eines anderen Teilnehmers: "Ich habe eine Erzeugungsanlage". Getroffen werden kann eine Aussage wie beispielsweise "Der Verbrauch der Anlage, die mit dem P2P-Teilnehmer xy verknüpft ist, war von 9:00 bis 9:15 am 3.5.2017 0,34 kWh. Ferner können Markt-Rollen-Autoritäten dem Energiemarkt garantieren, dass die Handelsaktivitäten des P2P-Kunden physikalisch abgesichert sind. Dazu kann eine Meldung generiert und an die betreffenden Stellen übermittelt werden wie "Die Energiemengen-Bilanz der Anlage, die mit dem P2P-Teilnehmer xy verknüpft ist, wird durch mich sichergestellt".

Dass eine Aussage, die nur durch eine Markt-Rollen-Autorität getätigt werden kann, auch durch eine Markt-Rollen-Autorität getätigt wurde, muss durch eine entsprechende Aussage der Markt-Autorität hinterlegt sein.

Vorteilhaft kann sichergestellt werden, dass ein Energiesystem tatsächlich existiert und am öffentlichen Netz angeschlossen ist. Dadurch kann gewährleistet werden, dass ein Handel mit Energie für dieses physische Gut auch eine physikalische Entsprechung hat.

Für die Energieerzeugung ist von Relevanz, welcher Art die eingespeiste Energie ist. Nach aktuellem Verständnis wird diese Aufgabe in der aktuellen Energiewelt durch den Versorgungsnetzbetreiber wahrgenommen. Zweckmäßigerweise kann eine zugehörige Physikalisches-Gut-Autorität (Physical-Asset-Authority) noch aufgespalten werden. In diesem Kontext sind die Konzepte Zählpunkt und/oder Messlokation und/oder Marktlokation zu sehen und zweckmäßig abzubilden.

Die Physikalisches-Gut-Autorität stellt sicher, dass die Zählerwerte und/oder der Lastgang einer Anlage, die in der Blockchain abgelegt sind, auch vertrauenswürdig sind. Im bekannten Energiemarkt ist hier die Rolle des Messstellenbetreibers angesiedelt.

Die Energiebalance-Autorität (Energy-Balance-Authority) stellt gegenüber dem Energiemarkt den Lieferanten des P2P-Marktteilnehmers dar. Gegenüber dem P2P-Marktteilnehmer positioniert er sich allerdings ausschließlich als Partner, der dem P2P-Teilnehmer in seinen Bilanzkreis integriert und den Netzzugang regelt. Von allen Autoritäten auf einer Blockchain ist dies die Energiemarktrolle, die die größte Veränderung erfährt, weil der Lieferant auf den Kern seines Geschäftes - nämlich die eigentliche Energielieferung im Sinne der Vollversorgung - verzichtet. Zwischen ihm und dem Kunden besteht ein Service-Liefervertrag über den Verbrauch oder ein Einspeisevertrag über die Erzeugung, d.h. er kennt die reale Identität seines Kunden und seiner Anlage, die durch die Physikalisches-Gut-Autorität in ihrer Existenz bestätigt wurde.

Sein Produkt an den P2P-Marktteilnehmer kann vorteilhaft Aspekte enthalten, die finanzielle Regelungen zur Bereitstellung von (positiver und negativer) Ausgleichsenergie beschreiben.
Der Kommunikationsansatz zwischen Autoritäten und ihren Klienten (Teilnehmern) ist dadurch geprägt, dass in der Blockchain jeder Teilnehmer (alle Autoritäten und P2P-Teilnehmer) seine Identität selbst bestimmt, während die Bestätigung, dass eine Blockchain-Identität eine reale Eigenschaft hat, durch die Autorität erfolgt. Die Kommunikation kann vorteilhaft in drei Schritten ablaufen:
(i) Die Anforderung des Teilnehmers (Anfrage), dass eine Autorität eine öffentliche Aussage auf der Blockchain trifft
(ii) Die öffentliche Aussage wird in der Blockchain durch die Autorität vorgeschlagen (Angebot)
(iii) Die Aussage der Autorität wird in der Blockchain durch den Teilnehmer bestätigt (Auftrag).

Die Anfrage erfolgt vorzugsweise außerhalb der Blockchain. Eine Autorität muss sowohl die reale Identität als auch die Blockchain-Identität eines Teilnehmers kennen. Da jeder Teilnehmer seine Blockchain-Identität nur selbst erzeugen kann, da nur dann dessen privater Schlüssel (Private Key) sicher ist, muss er seiner Autorität auf sicherem Wege bekannt geben, wie seine Blockchain-Identität, d.h. dessen öffentliche Schlüssel (Public Key) heißt, damit eine Autorität eine entsprechende Aufgabe für ihn übernehmen kann und/oder eine Aussage bestätigen kann (Anfrage des Teilnehmers an die Autorität).

Das Angebot erfolgt vorzugsweise innerhalb der Blockchain. Die Anfrage wird von der Autorität in eine Blockchain-Aussage umgewandelt. Dazu hat die Autorität eine eigene Identität erzeugt, mit der vorzugsweise die Blockchain-Aussage unterschrieben wird, und referenziert auf die Klienten-Identität, die in der Anfrage außerhalb der Blockchain vom Klienten übermittelt wurde. Die Aussage ist zu verstehen als ein Angebot der Autorität an den Klienten, eine definierte Aufgabe zu übernehmen.

Der Auftrag erfolgt innerhalb der Blockchain. Der Klient bestätigt auf der Blockchain mit seiner Unterschrift das Angebot (sofern er das Angebot nutzen möchte bzw. das Angebot der Autorität aus seiner Sicht inhaltlich in Ordnung ist, in einer eigenen Aussage. Hintergrund für den Orderschritt ist, dass prinzipiell alle Konten von Klienten, d.h. Teilnehmern, auf der Blockchain sichtbar sind und dadurch prinzipiell ein Dienstleister einen Teilnehmer ohne dessen Einverständnis übernehmen könnte.

Nach einer günstigen Ausgestaltung können die Datenbankzugriffswerkzeuge als Anwendung auf internetfähigen Endgeräten vorgesehen sein. Das Endgerät kann ein Computer (PC) sein, eine separate Anzeigeeinheit, etwa ein kleiner tragbarer Computer wie einen PDA (PDA = Personal Digital Assistant), ein Mobiltelefon oder auch ein intelligentes digitales Messsystem mit digitalem Zähler und Kommunikationseinheit. Das Datenbankzugriffswerkzeuge kann eine App auf einem Smartphone sein oder eine Anwendung auf einem Computer. Das Datenbankzugriffswerkzeug kann als intelligenter Agent ausgebildet sein, der eine Anzahl von aktuellen Informationen erhält, beispielsweise Wetterprognosen, Preise einer Strombörse und dergleichen und auf diese Weise eine Handelskompetenz aufweist. Jedes Datenbankzugriffswerkzeug kann individuell nach den Bedürfnissen des Teilnehmers ausgestaltet sein, was die Bedienung vereinfacht und den Einsatz komfortabel macht.

Datenbankzugriffswerkzeuge können so mit anderen teilnehmenden Datenbankzugriffswerkzeugen autonom die Einspeisung und/oder den Bezug von Energie aus dem Versorgungsnetz verhandeln und steuern.

Nach einer günstigen Ausgestaltung können die Zählereinrichtungen als intelligente digitale Messsysteme ausgebildet sein, wobei die Zählermesswerte mit Zeitstempel und gegebenenfalls andere Größen oder Messgrößen in vorbestimmten Zeitabständen bereitstellbar und/oder übermittelbar sind. Solche Zählereinrichtungen sind kalibriert und liefern verschlüsselte und zertifizierte Messgrößen mit hoher Vertrauenswürdigkeit. Die Zählermesswerte können als eine Art digitale Währung der Energie angesehen werden. Solche Zählermesswerte können beispielsweise ohne weitere Authentifizierung als vertrauenswürdige Größen gehandelt werden.

Es sind standardisierte intelligente Messsysteme bekannt und im kommerziellen Einsatz, die mit besonderem Vorteil einsetzbar sein können. Intelligente Messsysteme sind über eine Kommunikationseinheit, auch bekannt als so genanntes Smart Meter Gateway (SMGW), mit ihrer wenigstens einen modernen Messeinrichtung in Form eines digitalen Zählers sicher in ein Kommunikationsnetz eingebunden.

Der wenigstens eine digitale Zähler dient zur Erfassung elektrischer Energie und spiegelt den tatsächlichen Energieverbrauch und die tatsächliche Nutzungszeit wider und genügt den besonderen gesetzlichen Anforderungen, die zur Gewährleistung des Datenschutzes, der Datensicherheit und Interoperabilität in Schutzprofilen und technischen Richtlinien festgelegt werden können. Solche gesetzlichen Anforderungen sind beispielsweise in dem Erneuerbare-Energien-Gesetz vom 21. Juli 2016 und dem Kraft-Wärme-Kopplungsgesetz vom 19. März 2002 in der geänderten Fassung vom 31.Juli 2015 festgelegt, wie es im Jahr 2016 in Deutschland gültig ist

Die Kommunikationseinheit kann vorzugsweise eine definierte Businesslogik für eine Tarifierung und/oder Summenbildung und/oder Routing und dergleichen einschließlich der Verwaltung der Empfänger und/oder Krypto-Unterstützung umfassen.

Nach einer günstigen Ausgestaltung kann wenigstens ein Datenbankzugriffswerkzeug mit einer Prognoseeinheit für wenigstens energieerzeugungsrelevante Parameter gekoppelt oder koppelbar sein. Damit kann bei regenerativen Energien eine Wetterprognose herangezogen werden, um eine Menge an erzeugter Energie aus Sonnenenergie oder Windenergie zu einem bestimmten Zeitabschnitt in der Zukunft abzuschätzen. Umgekehrt kann auch ein Bedarf an Energie beispielsweise abhängig von Jahreszeit und Wetter prognostiziert werden.

Nach einer günstigen Ausgestaltung kann wenigstens ein Energiespeicher mit dem Versorgungsnetz gekoppelt oder koppelbar sein. Die Versorgungssicherheit und die Stabilität im Versorgungsnetz kann damit verbessert werden, indem nicht benötigte Energie aus dem Versorgungsnetz in den Energiespeicher eingespeist und/oder benötigte Energie aus dem Energiespeicher bei Bedarf entnommen werden kann, beispielsweise abhängig von Tageszeit oder Wetter.

Nach einem weiteren Aspekt der Erfindung wird ein Verfahren zum Betreiben eines Energieversorgungssystems vorgeschlagen, insbesondere mit einem erfindungsgemäßen Energieversorgungssystem wie vorstehend beschrieben, mit einem Versorgungsnetz sowie an das Versorgungsnetz angekoppelten Teilnehmern mit Entnahme- und/oder Einspeisvorrichtungen, mit denen Energie aus dem Versorgungsnetz bezogen und/oder eingespeist wird. Teilnehmerseitige Zählereinrichtungen sind mit dem Versorgungsnetz gekoppelt und erfassen aus dem Versorgungsnetz bezogene und/oder in das Versorgungsnetz eingespeiste Energie. Die teilnehmerseitigen Zählereinrichtungen übermitteln zumindest Zählermesswerte an eine Datenbank. Jeder Teilnehmer ist mit einem Datenbankzugriffswerkzeug mit der Datenbank gekoppelt, mit dem Daten in die Datenbank eingelesen und/oder aus der Datenbank ausgelesen werden. Wenigstens einer der Teilnehmer nimmt zur Netzstabilisierung mit wenigstens einer Netzkoppelstelle einen Überschuss an eingespeister Energie aus dem Versorgungsnetz auf und/oder speist eine Fehlmenge an Energie in das Versorgungsnetz ein.

Die teilnehmerseitigen Zählereinrichtungen übermitteln Zählermesswerte als Istwerte direkt oder indirekt an die Datenbank.

Dadurch, dass die Teilnehmer auf eine gemeinsame Datenbank zugreifen können, ist ein Bezug von Energie durch einen Teilnehmer möglich, die ein anderer Teilnehmer oder mehrere andere Teilnehmer in das Versorgungsnetz eingespeist haben, wobei die Mengen an eingespeister und bezogener Energie für jeden Teilnehmer transparent in der Datenbank hinterlegt sind. Dies ermöglicht einen kleinteiligen, regionalen Energiehandel auch in einem überregionalen Versorgungsnetz.

Auch kleine Mengen an Energie können so im Versorgungsnetz von einem Teilnehmer zum anderen gelangen. Trotzdem ist die Versorgungssicherheit und die Netzstabilität gewährleistet, wenn einer der Teilnehmer zur Netzstabilisierung mit wenigstens einer Netzkoppelstelle einen Überschuss an eingespeister Energie aus dem Versorgungsnetz aufnimmt und/oder eine Fehlmenge an Energie in das Versorgungsnetz einspeist.

Nach einer günstigen Ausgestaltung kann wenigstens ein teilnehmerseitiges Datenbankzugriffswerkzeug vorgesehen sein, mit dem wenigstens ein Angebot an prognostizierter einspeisbarer Energie an die Datenbank übermittelt werden kann. Durch eine Prognose über beispielsweise Wettervorhersagen kann eine Energiemenge in der Zukunft zu bestimmten Bedingungen angeboten werden.

Nach einer günstigen Ausgestaltung kann wenigstens ein Datenbankzugriffswerkzeug vorgesehen sein, mit dem ein Bedarf an beziehbarer Energie an die Datenbank übermittelt werden kann. Ein Teilnehmer, der als Verbraucher der beziehbaren Energie auftritt, hat auf diese Weise die Möglichkeit, seinen Bedarf an Energie direkt in die Datenbank zu schreiben und daraufhin direkt aus der Datenbank verschiedene schon bestehende und/oder neu hinterlegte Angebote zu prüfen und nach eigenen Spezifikationen für seinen prognostizierten Bedarf auszuwählen. Erfüllt keines der Angebote den prognostizierten Bedarf dieses Teilnehmers oder wird voraussichtlich nicht ausreichend Energie zur Verfügung gestellt, kann der konkrete Bedarf durch Energie des treuhänderischen Teilnehmers gedeckt werden, der zur Netzstabilisierung vorgesehen ist. Dies kann z.B. vertraglich geregelt und Bedingungen zum Bezug von Energie von diesem speziellen treuhänderischen Teilnehmer festgelegt sein.

Für den Fall, dass der Teilnehmer, der Energie beziehen will, weniger Energie bezieht als prognostiziert, kann der treuhänderische Teilnehmer diese Energie abnehmen und speichern oder weiterverkaufen.

Nach einer günstigen Ausgestaltung kann das Datenbankzugriffswerkzeug basierend auf einem Regelwerk mit ein oder mehreren Regeln ein oder mehrere Angebote aus der Datenbank auswählen. Vorteilhaft kann die Auswahl aus mehreren Angeboten automatisch erfolgen. Dies erlaubt eine komfortable Nutzung des Versorgungsnetzes durch den Teilnehmer, der Energie aus dem Versorgungsnetz beziehen will. Der Teilnehmer, der Energie beziehen will, kann beispielsweise Regeln zum Preis und/oder zur Art der Energie, beispielsweise elektrische Energie aus Windkraft, aus Sonnenenergie, und/oder zur Herkunftsregion der Energie und dergleichen vorgeben. Das Datenbankzugriffswerkzeug kann daraufhin autonom die dazu in der Datenbank vorliegenden Angebote für den spezifischen Bedarf prüfen und selbständig auswählen, um so den Bezug an Energie einzuleiten und zu steuern.

Nach einer günstigen Ausgestaltung kann ein Informationsfluss in wenigstens einem Datenbankzugriffswerkzeug einen Energiefluss im Versorgungsnetz steuern und/oder regeln. Dies erlaubt eine kleinteilige Energieversorgung auch in einem überregionalen oder gar länderübergreifenden Versorgungsnetz. Diese Steuer- und/oder Regelfunktion kann zwischen den verschiedenen Datenbankzugriffswerkzeugen der Teilnehmer autonom ohne händische Interaktion der Teilnehmer erfolgen.

Nach einer günstigen Ausgestaltung können Transaktionen zwischen der Datenbank und dem Datenbankzugriffswerkzeug authentifiziert und/oder deren Integrität zur Verfügung gestellt werden. Ein bleibender Eintrag in die Datenbank erfolgt vorzugsweise nur, wenn die Transaktion erfolgreich authentifiziert und/oder deren Integrität zur Verfügung gestellt ist. Vorzugsweise erfolgt eine Transaktion nur, wenn eine Authentifizierung und/oder Bereitstellung von Integrität eines oder mehrerer Teilnehmer bestätigt ist.

Die gewünschten Transaktionen können gegenüber festgelegten Regeln öffentlich geprüft und bei Konformität akzeptiert werden. Insbesondere kann die Authentifizierung anhand einer Blockchain-Technologie durchgeführt werden. Die Blockchain-Technologie, beispielsweise durch eine festgelegte Anzahl von Teilnehmern, ist als verteilte Datenbank im Bereich von Kryptowährungen (z.B. Bitcoin) bekannt.

Gegenüber zentralen Systemen ermöglicht diese Technologie dem Teilnehmer, dem zentralen Betreiber des Versorgungsnetzes zu vertrauen. Die Datenbank enthält eine erweiterbare Liste von Datensätzen, deren Integrität durch Speichern beispielsweise einer Prüfsumme des vorangegangenen Datensatzes und/oder einer Prüfsumme der gesamten Datenbank im jeweils nachfolgenden Datensatz gesichert ist. Nachträgliche Änderungen sind daher nicht möglich. Die Integrität der Datenbank ist für jeden Teilnehmer transparent und kann in der Blockchain öffentlich geprüft werden.

Werden kalibrierte Messwerte der intelligenten Messsysteme verwendet, kann insbesondere auf eine zusätzliche Authentifizierung verzichtet werden.

Nach einer günstigen Ausgestaltung kann eine Verrechnung von bezogener Energie direkt zwischen Energie einspeisenden und Energie beziehenden Teilnehmern auf Basis der in der Datenbank hinterlegten und authentifizierten Einspeise- und/oder Verbrauchsmengen an Energie erfolgen. Eine intermediäre Stelle zur Abrechnung eines Energieverbrauchs oder einer Energieeinspeisung kann damit entfallen.

Nach einer günstigen Ausgestaltung kann ein Bereitstellen von Energiespeicherkapazität zum Aufnehmen von Energie aus dem Versorgungsnetz und/oder ein Bereitstellen von Energie zum Einspeisen von Fehlmengen an Energie in das Versorgungsnetz anhand von einer Differenz zwischen Angebot und Anforderung in der Datenbank geplant und/oder durchgeführt werden. Dies ermöglicht dem Teilnehmer, der zur Netzstabilisierung vorgesehen ist, eine erhöhte Planungssicherheit für bereitzustellende Ressourcen für Energie und Speicher.

Nach einer günstigen Ausgestaltung können die Zählereinrichtungen die Zählermesswerte in vorbestimmten Zeitabständen mit Zeitstempel übermitteln. Auf diese Weise ist die aktuelle Menge an bezogener Energie oder die aktuelle Menge an eingespeister Energie mit hoher Sicherheit und Genauigkeit bekannt. Dies ermöglicht einen kleinteiligen, regionalen Energiehandel auch in einem überregionalen Versorgungsnetz. Auch kleine Mengen an eingespeister und/oder bezogener Energie können so im Versorgungsnetz zwischen den Teilnehmern registriert und verrechnet werden.

Nach einer günstigen Ausgestaltung können die Zählereinrichtungen im Push-Betrieb arbeiten. Günstigerweise ist das jeweilige Kommunikationsmodul der Zählereinrichtungen als Webclient ausgestaltet. Das Kommunikationsmodul kann eigenständig Daten, z.B. Zählermesswerte, an den Server mit der Datenbank übermitteln.

Die Zählermesswerte werden vorzugsweise periodisch übermittelt, beispielsweise viertelstündlich, halbstündlich oder dergleichen. Für einen internen Gebrauch kann für den Teilnehmer die Zählereinrichtung aktuelle Zählermesswerte in kürzeren Zeitabständen bereitstellen.

Auch die Datenbankzugriffswerkzeuge können vorteilhaft als Webclient ausgestaltet sein. Eine solch verteilte Datenverarbeitungsstruktur kann sehr effizient arbeiten und kann gegen Störungen günstig geschützt werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: ein Ausführungsbeispiel der Erfindung, bei dem mehrere Teilnehmer an ein Versorgungsnetz eines Energieversorgungssystems angeschlossen sind;
- Fig. 2: ein Detail des Versorgungsnetzes aus Figur 1;
- Fig. 3: ein Ausführungsbeispiel einer Transaktion zwischen einem Teilnehmer im Versorgungsnetz, der Energie beziehen will und einem Teilnehmer im Versorgungsnetz, der Energie anbietet.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

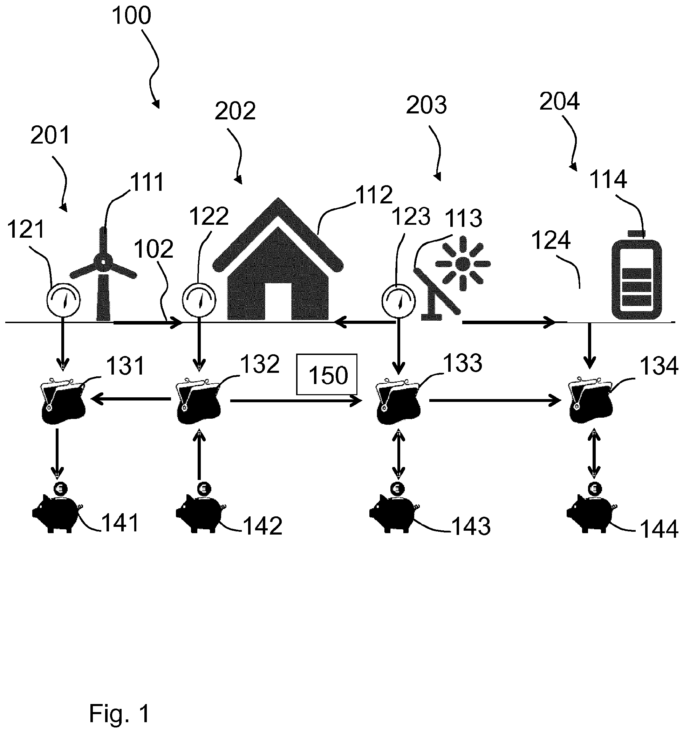

Figur 1 stellt ein Ausführungsbeispiel der Erfindung dar, bei dem mehrere Teilnehmer 201, 202, 203, 204 an ein Versorgungsnetz 102 eines Energieversorgungssystems 100 angeschlossen sind.

Die Teilnehmer 201, 202, 203, 204 verfügen über Entnahme- und/oder Einspeisvorrichtungen 111, 112, 113, 114, mit denen Energie aus dem Versorgungsnetz 102 beziehbar und/oder einspeisbar ist.

Teilnehmerseitige Zählereinrichtungen 121, 122, 123, 124, die insbesondere als digitale Zähler ausgebildet sind, sind mit dem Versorgungsnetz 102 zur Erfassung von aus dem Versorgungsnetz 102 bezogener und/oder in das Versorgungsnetz 102 eingespeister Energie gekoppelt.

Die teilnehmerseitigen Zählereinrichtungen 121, 122, 123, 124 sind mit einer Datenbank gekoppelt, und dazu ausgebildet, zumindest Zählermesswerte als Istwerte direkt oder indirekt an die Datenbank zu übermitteln.

Jeder Teilnehmer 201, 202, 203, 204 ist mittels eines Datenbankzugriffswerkzeugs 131, 132, 133, 134 mit der Datenbank gekoppelt, mit dem Daten in die Datenbank einlesbar und/oder aus der Datenbank auslesbar sind. Das Datenbankzugriffswerkzeug 131, 132, 133, 134 ist vorzugsweise ein intelligenter Software-Agent in Form beispielsweise einer App auf einem Mobiltelefon oder eine Anwendung auf einem Computer und stellt ein Zugriffsmittel auf die Datenbank dar, die zentral oder dezentral vorgesehen sein kann.

Wenigstens einer der Teilnehmer 201 ist zur Netzstabilisierung mit wenigstens einer Netzkoppelstelle vorgesehen, um einen Überschuss an eingespeister Energie aus dem Versorgungsnetz 102 aufzunehmen und/oder eine Fehlmenge an Energie in das Versorgungsnetz 102 einzuspeisen. Dieser Teilnehmer 201 übernimmt eine treuhänderische Funktion für das Versorgungsnetz 102. Optional können auch mehrere derartige Teilnehmer 201 vorgesehen sein.

Stromnetze können keine Energie speichern. Abweichungen von der Nennleistung in Wechselspannungsnetzen resultieren daher zwangsläufig in einer Änderung der im gesamten Wechselspannungsnetz synchronen Netzfrequenz. Bei einem Überangebot von elektrischer Leistung im Wechselspannungsnetz kommt es zu einem Anstieg der Netzfrequenz über der Nennfrequenz, bei einem Unterangebot zu einem Abfall unter die Nennfrequenz. Die Regelleistung stellt die Netzstabilität sicher, indem mit positiver Regelleistung die Netzfrequenz bei einem Unterangebot wieder auf die Nennfrequenz angehoben wird und mit negativer Regelleistung bei einem Überangebot die Netzfrequenz auf die Nennfrequenz abgesenkt wird. Die angebotene Primärregelleistung eines Kraftwerks muss bei jeder Frequenzabweichung von bis zu ± 200 mHz innerhalb von 30 Sekunden aktiviert und mindestens 15 Minuten abgegeben werden.

Der Teilnehmer 201 verfügt über wenigstens eine Energiequelle 111, mit der Energie in das Versorgungsnetz 102 eingespeist wird. Ferner ist wenigstens ein Speicher vorgesehen (nicht dargestellt), mit dem Energie gespeichert werden kann. Der Speicher kann ein Pumpspeicherkraftwerk, eine elektrochemische Speichereinrichtung, ein Schwungradspeicher oder dergleichen sein.

Die Teilnehmer 201, 202, 203, 204 können als reine Verbraucher auftreten, die nur Energie aus dem Versorgungsnetz 102 beziehen, wie etwa Teilnehmer 202 und reine Energieerzeuger, die nur Energie in das Versorgungsnetz 102 einspeisen, wie etwa Teilnehmer 203. Es sind auch Mischformen zwischen Verbraucher und Erzeuger möglich, wie etwa Teilnehmer 201 und 204.

Aus den übermittelten Istwerten der Zählerwerte ist der aktuelle Verbrauch oder die aktuelle Menge eingespeister Energie des jeweiligen Teilnehmers 201, 202, 203, 204 im Versorgungsnetz 102 bekannt. Daraus ergibt sich dann ein Preis für die bezogene oder gelieferte Energie, was in entsprechende Konten 141, 142, 143, 144 der Teilnehmer 201, 202, 203, 204 fließt oder dort entnommen wird.

Bei einer Diskrepanz gleicht der treuhänderische Teilnehmer 201 einen Fehlbestand oder Überschuss im Versorgungsnetz 102 aus. Dies kann nach den üblichen Vorgaben zur Erbringung von Regelleistung in derartige Versorgungsnetze 102 erfolgen. In Deutschland erfolgt dies bislang durch vorhandene Kraftwerke konventioneller, nuklearer und regenerativer Art nach Vorgaben und Regeln des europäischen Verbundnetzes (UTCE-Netz).

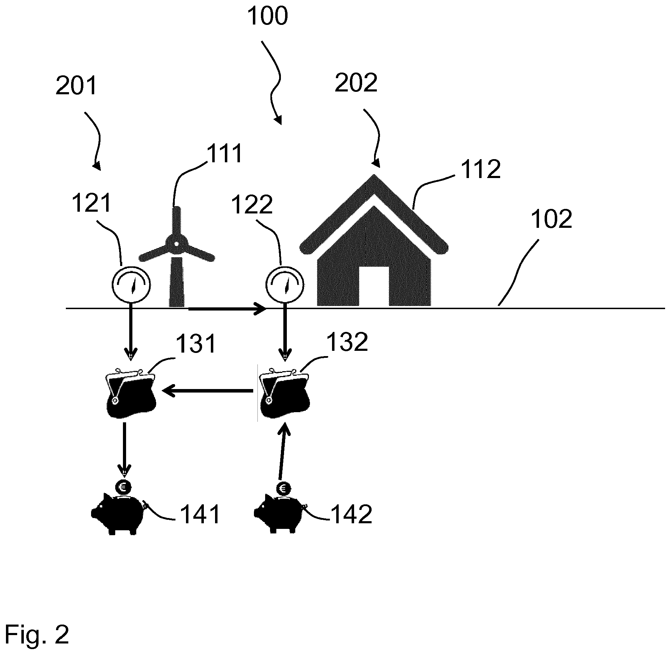

Figur 2 zeigt ein Detail des Versorgungsnetzes 102 aus Figur 1. Teilnehmer 202 ist als Verbraucher aktiv und will nur elektrische Energie beziehen. Teilnehmer 201 kann Energie liefern. Sofern das Angebot des Teilnehmers 201 mit dem Bedarf des Teilnehmers 202 für sein Haus als Entnahmevorrichtung 112 und dessen individuellen Anforderungen übereinstimmt, bezieht Teilnehmer 202 die Energie von Teilnehmer 201 und entrichtet hierfür den entsprechenden Kaufpreis. Eine Anforderung kann beispielsweise der Preis sein, oder die Herkunft der Energie, etwa nur Photovoltaikstrom aus dem näheren Umkreis des Teilnehmers 202, und dergleichen. Bedarf und Angebot wird mittels der Datenbankzugriffswerkzeuge 131, 132, der Teilnehmer 201, 202 über die Datenbank 150 ausgetauscht und kann durch die Datenbankzugriffswerkzeuge 131, 132 beispielsweise auch autonom verhandelt werden, so dass der Bezug der Energie automatisch ohne weitere Steuerung erfolgen kann. Bedarf und Angebot sind für jeden Teilnehmer des Versorgungsnetzes 102 transparent, ebenso wie die erfolgte Einspeisung und Abnahme der Energie.

Teilnehmer 202 kann auch einen zukünftigen Bedarf an Energie mit dem Datenbankzugriffswerkzeug 132 an die Datenbank 150 melden und nach geeigneten Angeboten suchen.

Ist Teilnehmer 201 der treuhänderische Teilnehmer, der für die Netzstabilität verantwortlich ist, ist es zweckmäßig, dass die Teilnehmer 201, 202, 203, 204 (Figur 1) untereinander eine vertragliche Bindung, insbesondere in Form von so genannten "Smart Contracts", eingehen, so dass die Teilnehmer 202, 203, 204 einen Bezugssicherheit für Energie einerseits und eine Abnahmesicherheit für eingespeiste Energie andererseits haben.

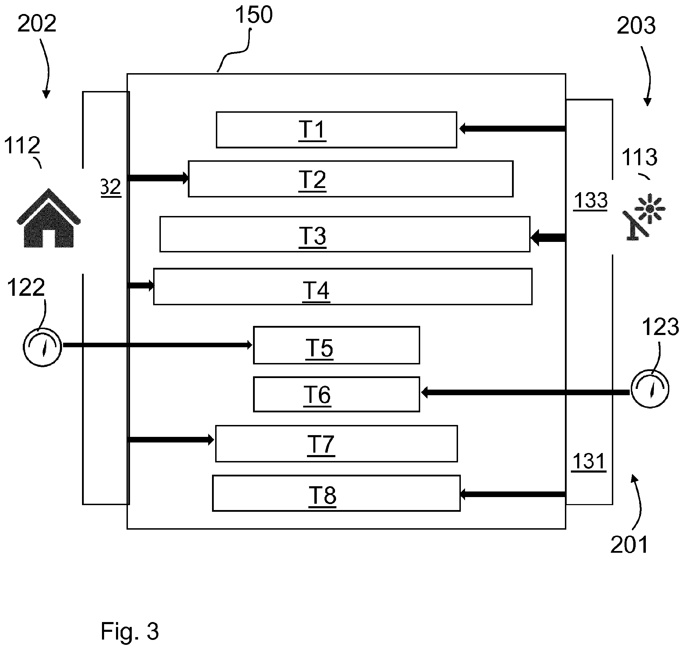

Teilnehmer 202 kann zu einem anderen Zeitpunkt von einem oder mehreren anderen Teilnehmern 203, 204 Energie beziehen, wenn deren Angebote zu einem bestimmten Zeitpunkt adäquater sind als die von Teilnehmer 201. Dies ist in Figur 3 skizziert. Jedoch ist für den Teilnehmer 202 stets sichergestellt, dass Energie verfügbar ist, da der treuhänderische Teilnehmer 201 eine Fehlmenge an Energie ausgleicht, wenn kein ausreichendes Drittangebot vorliegt. Ebenso ist stets sichergestellt, dass Energie abgenommen wird, wenn etwa der Teilnehmer 202 eine höhere Menge an Energie von einem Teilnehmer 201, 203, 204 angefordert hat, diese im entsprechenden Zeitpunkt entgegen seiner Prognose jedoch nicht benötigt. Teilnehmer 201 kann diese Energie speichern oder weiterverkaufen.

Ebenso können Teilnehmer 203, 204, die in das Versorgungsnetz 102 einspeisen, über eine vertragliche Bindung Überschüsse an Energie an den Teilnehmer 201 weiterleiten.

Ein Informationsfluss in wenigstens einem Datenbankzugriffswerkzeug 131, 132, 133, 134 steuert und/oder regelt so einen Energiefluss im Versorgungsnetz 102.

Eine Verrechnung von bezogener Energie und/oder eingespeister Energie erfolgt direkt zwischen Energie einspeisenden und Energie beziehenden Teilnehmern 201,202,203,204.

Transaktionen zwischen der Datenbank 150 (Figur 3) und Datenbankzugriffswerkzeugen 131. 132, 133, 134 werden authentifiziert, wobei die Authentifizierung vorzugsweise anhand einer Blockchain-Technologie durchgeführt wird. Ebenso kann die Integrität der Transaktionen in der Blockchain gewährleistet werden. Andere Authentifizierungstechniken sind jedoch ebenfalls möglich.

Durch die zertifizierten Messwerte der intelligenten digitalen Zählereinrichtungen 121, 122, 123, 124 und der Authentifizierung der Transaktionen sind die bezogenen oder eingespeisten Mengen an Energie vertrauenswürdig und können als "Energie-Währung" angesehen werden. Beispielsweise könnten auch die zertifizierten Messwerte direkt zur Authentifizierung herangezogen werden und damit die Integrität der Datenbank sichergestellt werden.

Vorteilhaft kann wenigstens eine Autoritäts-Instanz vorgesehen sein, mit der alle wesentlichen administrativen Aufgaben des Energiemarktes durch Marktrollen abgedeckt sein und aktuell diese administrativen Aufgaben auch nur über diese Rollen bedient werden können. Dabei stellt eine Markt-Autorität (Market Authority) sicher, dass alle Aktivitäten der Blockchain hinsichtlich der Bilanzzeiträume kompatibel sind und dass alle Blockchain-Teilnehmer, die sich als Inhaber einer definierten Marktrolle ausgeben, diese Marktrolle auch tatsächlich innehaben und alle Aktivitäten ausschließlich auf einem festgelegten Zeitraster stattfinden. Dadurch ist sichergestellt, dass Handelsgeschäfte, aber auch z.B. Aussagen zu Anlagenexistenz und Zählerwerte, zueinander kompatibel sind. Der Markt-Autorität sind - außerhalb der Blockchain - alle Inhaber von relevanten Marktrollen (z.B. Messstellenbetreiber, Lieferant, Versorgungsnetzbetreiber) bekannt. Ihr ist auch bekannt, mit welchen Blockchain-Identitäten diese Marktrolle agiert. Dadurch ist sie in der Lage für alle Aktivitäten eines Marktrollen-Inhabers zu bestätigen, dass diese Aktion zulässig ist.

Das oder die Blockchain-Konten der Markt-Autorität sind veröffentlicht, beispielsweise im Blockchain-Code. Dadurch kann sichergestellt werden, dass Aussagen, die nur durch die Markt-Autorität getätigt werden dürfen, auch von dieser kommen.

Die Kommunikation kann vorteilhaft in drei Schritten ablaufen:
(i) Die Anforderung des Teilnehmers, dass eine Autorität eine öffentliche Aussage auf der Blockchain trifft (Anfrage)
(ii) Die öffentliche Aussage wird in der Blockchain durch die Autorität vorgeschlagen (Angebot)
(iii) Die Aussage der Autorität wird in der Blockchain durch den Teilnehmer bestätigt (Auftrag).

Figur 3 zeigt ein Beispiel von Transaktionen T1-T7 mit der Datenbank 150 und den zwei Datenbankzugriffswerkzeugen 132, 133 des Teilnehmers 202 mit dem Teilnehmer 203.

Die Energie ist in Wattstunden angegeben, wenn Zählerstände verwendet werden. Wird alternativ die Durchschnittslast verwendet, wird der Wert in Watt angegeben.

In der ersten Transkation T1 bietet der Teilnehmer 203 mit Photovoltaik erzeugte Energie an (Angebot), die er nach seiner Prognose voraussichtlich um 9:15 zu einem Preis 7 zur Verfügung stellen kann. Teilnehmer 203 hat ein Konto mit der Nummer 4711:
T1: Offer (Offer Account=4711 Product=Energy (Wattstunden = 2300, Time=9:15, Price=7))

Teilnehmer 202 mit dem Konto 17566 will in der Transaktion T2 zum Zeitpunkt 9:15 Energie von Teilnehmer 203 beziehen, und zwar 700 Wattstunden zum Preis von 7 (Auftrag):
T2: Order (OfferAccount=4711, OrderAccount=17566, Product=Energy (Wattstunden=700, Time=9:15, Price=7))

In Transaktion T3 nimmt Teilnehmer 203 den Auftrag von Teilnehmer 202 an, allerdings kann nur eine kleinere Energiemenge geliefert werden (Bestätigung):
T3: Confirmation (OfferAccount=4711, OrderAccount=17566, Product=Energy (Wattstunden=400, Time=9:15, Price=4), OfferMoneyAccount 5673498).

In Transaktion T4 kauft Teilnehmer 202 die angebotene kleinere Energiemenge:
T4: Buy (OfferAccount=4711, OrderAccount=17566, OfferMoneyAccount 5673498, OrderMoneyAccount 89876547, Value=4).

Zum Zeitpunkt 9:15 bezieht Teilnehmer 202 eine Energiemenge von 412 Wattstunden in Transaktion T5, was als Istwert an die Datenbank 150 geliefert wird:
T5: EnergyValue (Account 17566, Time 9:15, Wattstunden=-412)

Teilnehmer 202 hat eine größere Energiemenge entnommen, als von Teilnehmer 203 in der Transaktion T3 zugesagt wurde.

Teilnehmer 203 speist zum Zeitpunkt 9:15 nicht eine Menge von Energie von 700 Wattstunden, sondern nur 671 Wattstunden ein, was in Transaktion T6 der Datenbank 150 übermittelt wird:
T6: EnergyValue (Account 4711, Time 9:15, Wattstunden=671).

Der treuhänderische Teilnehmer 201 gleicht dies in den Transaktionen T7 gegenüber Teilnehmer 202 und T8 gegenüber Teilnehmer 203 aus und speist für Teilnehmer 202 12 Wattstunden und für Teilnehmer 203 29 Wattstunden ein:
T7: TrustedDelivery (Account 17566, TrustAccount=3456789, Time=9:15, Wattstunden=12)
T8: TrustedDelivery (Account 4711, TrustAccount=0987654321, Time=9:15, Wattstunden=29).

## Patentansprüche

1. Energieversorgungssystem (100) mit einem Versorgungsnetz (102) sowie an das Versorgungsnetz (102) angekoppelten Teilnehmern (201, 202, 203, 204) mit Entnahme- und/oder Einspeisvorrichtungen (111, 112, 113, 114), mit denen Energie aus dem Versorgungsnetz (102) beziehbar und/oder einspeisbar ist,
(i) wobei teilnehmerseitige Zählereinrichtungen (121, 122, 123, 124) vorgesehen sind, welche mit dem Versorgungsnetz (102) gekoppelt sind zur Erfassung von aus dem Versorgungsnetz (102) bezogener und/oder in das Versorgungsnetz (102) eingespeister Energie;
(ii) wobei die teilnehmerseitigen Zählereinrichtungen (121, 122, 123, 124) mit einer Datenbank (150) gekoppelt sind;
(iii) wobei die teilnehmerseitigen Zählereinrichtungen (121, 122, 123, 124) ausgebildet sind, zumindest Zählermesswerte direkt oder indirekt an die Datenbank (150) zu übermitteln;
(iv) wobei jeder Teilnehmer (201, 202, 203, 204) mittels eines Datenbankzugriffswerkzeugs (131, 132, 133, 134) mit der Datenbank (150) gekoppelt ist, mit dem Daten in die Datenbank (150) einlesbar und/oder aus der Datenbank (150) auslesbar sind;
(v) wobei wenigstens einer der Teilnehmer (201) zur Netzstabilisierung mit wenigstens einer Netzkoppelstelle vorgesehen ist, um einen Überschuss an eingespeister Energie aus dem Versorgungsnetz (102) aufzunehmen und/oder eine Fehlmenge an Energie in das Versorgungsnetz (102) einzuspeisen.

2. Energieversorgungssystem nach Anspruch 1, wobei wenigstens ein teilnehmerseitiges Datenbankzugriffswerkzeug (131, 132, 133, 134) vorgesehen ist, um wenigstens ein Angebot an prognostizierter einspeisbarer Energie an die Datenbank (150) zu übermitteln.

3. Energieversorgungssystem nach Anspruch 1 oder 2, wobei wenigstens ein Datenbankzugriffswerkzeug (131, 132, 133, 134) vorgesehen ist, um einen Bedarf an beziehbarer Energie an die Datenbank (150) zu übermitteln.

4. Energieversorgungssystem nach Anspruch 2 oder 3, wobei das Datenbankzugriffswerkzeug (131, 132, 133, 134) ein Regelwerk mit ein oder mehreren Regeln umfasst, wobei basierend auf dem Regelwerk Angebote aus der Datenbank (150) auswählbar sind.

5. Energieversorgungssystem nach einem der vorhergehenden Ansprüche, wobei eine Vermittlungseinrichtung vorgesehen ist, die Zählermesswerte einer oder mehrerer Zählereinrichtungen (121, 122, 123, 124) erfasst und über eine Kommunikationsverbindung zur Datenbank (150) weiterleitet.

6. Energieversorgungssystem nach einem der vorhergehenden Ansprüche, wobei eine direkte oder indirekte Kommunikationsverbindung zwischen Datenbankzugriffswerkzeugen (131, 132, 133, 134) vorgesehen ist zur Authentifizierung und/oder Bereitstellung von Integrität einer oder mehrerer Transaktionen mit der Datenbank und/oder wobei eine direkte oder indirekte Kommunikationsverbindung zwischen Datenbankzugriffswerkzeugen (131, 132, 133, 134) vorgesehen ist zur Authentifizierung und/oder Bereitstellung von Integrität eines oder mehrerer Teilnehmer.

7. Energieversorgungssystem nach einem der vorhergehenden Ansprüche, wobei die Datenbankzugriffswerkzeuge (131, 132, 133, 134) als Anwendung auf internetfähigen Endgeräten vorgesehen sind.

8. Energieversorgungssystem nach einem der vorhergehenden Ansprüche, wobei die Zählereinrichtungen (121, 122, 123, 124) als intelligente digitale Messsysteme ausgebildet sind, wobei die Zählermesswerte in vorbestimmten Zeitabständen mit Zeitstempel übermittelbar sind.

9. Energieversorgungssystem nach Anspruch 8, wobei die Messsyteme jeweils mindestens einen digitalen Zähler und mindestens eine Kommunikationseinheit umfassen.

10. Energieversorgungssystem nach einem der vorhergehenden Ansprüche, wobei wenigstens ein Datenbankzugriffswerkzeug (131, 132, 133, 134) mit einer Prognoseeinheit für wenigstens energieerzeugungsrelevante Parameter gekoppelt oder koppelbar ist.

11. Energieversorgungssystem nach einem der vorhergehenden Ansprüche, wobei wenigstens ein Energiespeicher mit dem Versorgungsnetz (102) gekoppelt oder koppelbar ist.

12. Verfahren zum Betreiben eines Energieversorgungssystems (100), insbesondere nach einem der vorhergehenden Ansprüche, mit einem Versorgungsnetz (102) sowie an das Versorgungsnetz (102) angekoppelten Teilnehmern (201, 202, 203, 204) mit Entnahme- und/oder Einspeisvorrichtungen (111, 112, 113, 114), mit denen Energie aus dem Versorgungsnetz (102) bezogen und/oder eingespeist wird,
(i) wobei teilnehmerseitige Zählereinrichtungen (121, 122, 123, 124) mit dem Versorgungsnetz (102) gekoppelt sind und aus dem Versorgungsnetz (102) bezogene und/oder in das Versorgungsnetz (102) eingespeiste Energie erfassen;
(ii) wobei die teilnehmerseitigen Zählereinrichtungen (121, 122, 123, 124) zumindest Zählermesswerte an eine Datenbank (150) übermitteln;
(iii) wobei jeder Teilnehmer (201, 202, 203, 204) mittels eines Datenbankzugriffswerkzeugs (131, 132, 133, 134) mit der Datenbank (150) gekoppelt ist, mit dem Daten in die Datenbank (150) eingelesen und/oder aus der Datenbank (150) ausgelesen werden;
(iv) wobei wenigstens einer der Teilnehmer (201) zur Netzstabilisierung mit wenigstens einer Netzkoppelstelle einen Überschuss an eingespeister Energie aus dem Versorgungsnetz (102) aufnimmt und/oder eine Fehlmenge an Energie in das Versorgungsnetz (102) einspeist.

13. Verfahren nach Anspruch 12, wobei wenigstens ein teilnehmerseitiges Datenbankzugriffswerkzeug (131, 132, 133, 134) vorgesehen ist, mit dem wenigstens ein Angebot an prognostizierter einspeisbarer Energie an die Datenbank (150) übermittelt wird.

14. Verfahren nach Anspruch 12 oder 13, wobei wenigstens ein Datenbankzugriffswerkzeug (131, 132, 133, 134) vorgesehen ist, mit dem ein Bedarf an beziehbarer Energie an die Datenbank (150) übermittelt wird.

15. Verfahren nach Anspruch 13 und 14, wobei das Datenbankzugriffswerkzeug (131, 132, 133, 134) basierend auf einem Regelwerk mit ein oder mehreren Regeln ein oder mehrere Angebote aus der Datenbank (150) prüft und/oder auswählt, wobei vorzugsweise die Auswahl aus mehreren Angeboten automatisch erfolgt.

16. Verfahren nach einem der Ansprüche 12 bis 15, wobei ein Informationsfluss in wenigstens einem Datenbankzugriffswerkzeug (131, 132, 133, 134) einen Energiefluss im Versorgungsnetz (150) steuert und/oder regelt.

17. Verfahren nach einem der Ansprüche 12 bis 16, wobei Transaktionen zwischen der Datenbank (150) und dem Datenbankzugriffswerkzeug (131, 132, 133, 134) authentifiziert und/oder deren Integrität zur Verfügung gestellt werden, wobei vorzugsweise ein Eintrag in die Datenbank (150) nur erfolgt, wenn die Transaktion erfolgreich authentifiziert und deren Integrität zur Verfügung gestellt ist und/oder wobei eine Transaktion nur erfolgt, wenn eine Authentifizierung und/oder Bereitstellung von Integrität eines oder mehrerer Teilnehmer (201, 202, 203, 204) bestätigt ist.

18. Verfahren nach Anspruch 17 , wobei die Authentifizierung und/oder Bereitstellung der Integrität anhand einer Blockchain-Technologie durchgeführt wird.

19. Verfahren nach einem der Ansprüche 12 bis 18, wobei eine Verrechnung von bezogener Energie direkt zwischen Energie einspeisenden und Energie beziehenden Teilnehmern (201, 202, 203, 204) erfolgt.

20. Verfahren nach einem der Ansprüche 12 bis 19, wobei ein Bereitstellen von Energiespeicherkapazität zum Aufnehmen von Energie aus dem Versorgungsnetz (102) und/oder ein Bereitstellen von Energie zum Einspeisen von Fehlmengen an Energie in das Versorgungsnetz (102) anhand von einer Differenz zwischen Angebot und Anforderung in der Datenbank (150) geplant und/oder durchgeführt wird.

21. Verfahren nach einem der Ansprüche 12 bis 20, wobei die Zählereinrichtungen (121, 122, 123, 124) die Zählermesswerte in vorbestimmten Zeitabständen mit Zeitstempel übermitteln und/oder wobei die Zählereinrichtungen (121, 122, 123, 124) im Push-Betrieb arbeiten.
